# EUROPEAN PATENT SPECIFICATION

(11) **EP 1 838 119 B1**
(45) Date of publication and mention of the grant of the patent: **13.05.2009**
(21) Application number: 07104593.4
(22) Date of filing: 21.03.2007
(51) Int. Cl.: H04W 24/02

(54) **Method of network planning and optimization, radio network, base station and base station controller**
Verfahren zur Netzwerkplanung und -optimierung, Funknetzwerk, Basisstation und Basisstationssteuerung
Procédé de planification et d'optimisation de réseau, réseau radio, station de base et contrôleur de station de base

(30) Priority: 22.03.2006 CN 200610024962
(43) Date of publication of application: 26.09.2007
(73) Proprietor: Huawei Technologies Co., Ltd., Longgang District Shenzhen, Guangdong Province, 518129 (CN)
(72) Inventor: Hu, Bo, 518129, Shenzhen (CN); Xiong, Jianqiu, 518129, Shenzhen (CN)
(74) Representative: Viering, Jentschura & Partner

(56) References cited:
- EP-A- 1 304 896
- WO-A-00/25440
- WO-A-99/00999
- WO-A-20/05062647
- DE-B3-2102004 010 18

## Description

### Cross-references to related applications

This application claims priority to Chinese Patent Application No. 200610024962.6, filed with the Chinese Patent Office on March 22, 2006, entitled "Radio Network and Method of Planning and Optimization for the Same".

### Field of the Invention

The present invention relates to the field of radio communication technologies, and in particular to a method of radio network planning and optimization, a radio network, a base station and a base station controller.

### Background of the Invention

In recent years, with the rapid development of mobile telecommunication, the continual expansion of network size and the rapid increase of the number of subscribers, the subscribers' demand for high network performance and quality is also increasing, and the network management by operators is transformed from a qualitative requirement on signal coverage to a quantitative management of network performance indicators.

Network planning plays an important role in the process of building a mobile communication network, and a good network planning can improve the performance of the mobile communication network greatly.

Of course, it is not enough to only have relatively perfect network planning because the operation condition of a mobile wireless network may greatly change dynamically and be affected by outer impersonal circumstance factors. The traffic distribution changes dynamically due to the extension of subscriber market, the continual expansion of network capacity, the continual increase of network service items and the quick changes of constructions in cities and countries. Therefore, further maintenance is needed for a mobile communication network after the network is built. Among other things, the network optimization is an important part in the maintenance of network operation, which aims to improve the network communication quality, make the service image better and make full use of the network resources.

With the development of new technologies, more and more kinds of services are developed in Code Division Multiple Access (CDMA)/Global System for Mobile communication (GSM) networks. Those services include not only voice services but also some value-added services such as a wireless data service and an image service, etc., and are evolving towards multimedia services, thus resulting in higher and higher requirements on network quality and more and more heavy tasks of network optimization.

The network optimization is a process of making necessary adjustment on unreasonable parts in a network by using various techniques, in the premise of fully learning the conditions of the network operation.

A mobile communication network is a dynamic multi-dimensional system in which changes may occur in the following four aspects after the network is put into service: first, terminal subscribers, such as the geographical distribution of the subscribers, and the signaling call model, etc.; second, network operation circumstance, such as new constructions, roads and plants; third, network structure, including base station distribution and system capacity, etc.; fourth, application techniques.

Because the changes in these aspects will affect network indices, the relevant monitoring and optimization of network will be performed gradually with the development of network instead of being completed immediately. Therefore, the network optimization should be performed continually in order to make full use of the existing equipment, sources and capacity of the network, thus to improve the average quality of service of the network and increase the benefit thereof at utmost.

In the prior art, the base station distribution and the radio resource are primarily planned and the relevant parameters are primarily set by technicians through a network planning simulation tool when building a network. The technicians simulate the radio circumstance of the system using a simulation planning software, so as to analyze the system as a whole, including predicting the coverage area of a preliminarily determined station address and analyzing the reasonability of traffic sharing by the surrounding base stations, etc.

After the network is built primarily, the technicians optimize the network continually to make the built network achieve a better effect.

The network optimization is to find problems by constantly monitoring various technical data of the network and to adjust the exiting equipment and parameters based on the exiting problems to optimize the network performance indicators, so as to bring the network capacity into play at utmost and improve the average quality of service of the network.

The network optimization may include: 1. eliminating equipment failures; 2. improving network operation indicators, such as radio completion rate, call drop rate, the worst cell, handover success rate and congestion rate, etc.; 3. improving voice quality, such as balancing the traffic between the cells inside the network; 4. network balancing, such as signaling load balancing, equipment load balancing and link load balancing, etc.; 5. adjusting the network resources reasonably, for example, improving equipment and spectrum utilization and adjusting the traffic in each channel, etc.; 6. creating and maintaining a long term network optimization platform, and creating and maintaining network optimization archives.

The implementation of radio network optimization requires the knowledge of the network coverage situation, that is, it requires a parameter collecting, a data analyzing and a testing on a network put into service so as to find the factors which affect the network quality and make the network operate in an optimum status through technical means (hardware) or parameter adjustment.

To know the coverage situation of a network is time-consuming, laborious and costly. At the same time, it is also a very important task, however. Drive test is employed in the existing technical solution to find out the network coverage situation. The so-called drive test works this way: a network planner with dedicated test equipment including a location receiver, a test receiver, a distance meter and test software, etc. moves in a mobile network by vehicle or manpower to test the strength and quality, etc. of radio signals at different points of the network and records the tested geographical position at the same time. Then the signal coverage situation in the entire network is analyzed using dedicated tool software. A ladder diagram illustrating the signal strength of base station coverage areas in the mobile communication network can be drawn according to the drive test result, and the network builder and the network operator may adjust the network parameters according to such a result.

In a practical application of the above prior art solution, the method of network planning and optimization is difficult to be implemented and tends to be influenced by environment and man-induced factors, thus it has limitations.

This situation mainly results from the fact that the present planning and optimization including the drive test, etc. are substantially implemented manually. In the case that there are a number of base stations and the networking is complicated, the workload of planning and optimization will become heavier and not easy to be implemented. Generally, a detailed network traffic distribution rule may not be obtained since optimization methods such as drive test, etc. are easily affected by environment factors, and the network optimization may be only performed according to a local test, thus it has great limitation and uncertainty. In addition, once an adjustment is needed for an optimized network, such as adding base stations, adjusting part of the radio parameters, etc., a re-optimization for the entire network is required to be performed.
Germanic patent application DE 10 2004 010 182 B3 discloses a method and arrangement for detecting a radio coverage in a synchronous multicellular mobile radio system having a multitude of synchronous base stations that are connected to an evaluating unit.
European patent application EP 1 304 896 A2 discloses a method in which adjoining base stations of a cellular network measure data relating to the local topology of adjoining cells and store said data in a table.
International patent application W0 00/25440 A1 discloses a frequency hopping method and a base station comprising at the receiver end a number of baseband processing means and broadband receiver units.

### Summary of the Invention

The present invention is to provide a method for network planning and optimization, a radio network, a base station and a base station controller, so as to improve the effect of the network planning and optimization.

An embodiment of the invention provides a method for network planning and maintenance of a radio communications network, the radio communication network including a base station controller and a plurality of base stations subordinate to the base station controller, the method comprising: obtaining, by subordinate base stations in the radio communication network, downlink signals of adjacent base stations being adjacent to the respective subordinate base stations; reporting, by the subordinate base stations, information carried by the obtained downlink signals of the adjacent base stations to the base station controller; receiving, in the base station controller, the information reported from the subordinate base stations; performing, by the base station controller, planning and maintenance of the network according to the information received,

The obtaining the downlink signals includes obtaining the downlink signals of the adjacent base stations through a cell searching function and/or a broadcast channel.

According to another embodiment of the invention, there is provided a radio network adapted for network planning and maintenance. The radio network includes a base station controller and a plurality of base stations subordinate to the base station controller, each of the subordinate base stations comprising a terminal receiving unit for obtaining downlink signals of base stations adjacent to the subordinate base station; the base station controller comprising a processing module for implementing network planning and maintenance according to information received; and the subordinate base stations being arranged for reporting information carried by the downlink signals obtained by the terminal receiving unit in the subordinate base stations to the base station controller; and the processing module in the base station controller being adapted for performing the network planning and maintenance according to the information received. The terminal receiving unit is adapted for obtaining downlink signals of the adjacent base stations through a cell searching function and/or a broadcast channel.

Another embodiment of the present invention provides a base station. The base station includes a main control unit, a baseband processing module and an intermediate and radio frequency subsystem. The base station further includes a terminal receiving unit for obtaining downlink signals of base stations adjacent to the base station (Node B, 200). The terminal receiving unit is adapted for obtaining the downlink signals of the adjacent base stations through a cell searching function and/or a broadcast channel.

Another embodiment of the present invention provides a base station controller. The base station controller includes a processing module for a radio communications network including a plurality of base stations subordinate to the base station controller, the base station controller being arranged for receiving downlink signals of adjacent base stations adjacent of respective base stations subordinate to the base station controller; the processing module being adapted for implementing a network planning and maintenance according to information carried by the received downlink signals received; wherein the downlink signals of the adjacent base stations are obtained by the respective base stations through a cell searching function and/or a broadcast channel.

In the technical solutions provided by an embodiment of the present invention, each of the base stations in the radio network is added with a terminal receiving unit which is adapted to obtain information carried by the downlink signals of the base station's adjacent base stations dynamically through a cell searching function and/or a broadcast channel. Each of the base stations reports its obtained information carried by the downlink signals of the adjacent base stations to a base station controller, i.e., a Radio Network Controller (RNC), to which the base station pertains, and the network planning and optimization is implemented by a processing module in the RNC which is adapted to perform a network planning and optimization according to the information carried by the downlink signals reported by the RNC's subordinate base stations.

In the technical solutions provided by an embodiment of the present invention, since the network planning and optimization is implemented by the RNC according to the information carried by the downlink signals of the adjacent base stations which is reported by the subordinate base stations of the RNC, the effect of automatic network planning and optimization is improved greatly, and the speed of network construction is increased as well as the cost of network construction and maintenance is reduced. At the same time, information carried by the downlink signals of the adjacent base stations is obtained by each of the base stations dynamically, and is reported in real time to the RNC to which the base station pertains, without affecting the normal operating of the base station. In this way, the RNCs in the radio network may perform an adjustment on the radio network in real time automatically according to the reported information so as to optimize the network.

### Brief Description of the Drawings

Fig. 1 is a schematic diagram illustrating the structure of a UMTS network in radio networks according to the prior art;

Fig. 2 is a schematic diagram illustrating the structure of a conventional base station in a radio network ;

Fig. 3 is a schematic diagram illustrating the system structure of a radio network according to the first embodiment of the invention;

Fig. 4 is a flow chart illustrating a method of network planning and optimization in a radio network according to the second embodiment of the invention;

Fig. 5 is a schematic diagram illustrating the structure of a conventional base station controller in a radio network;

Fig. 6 is a schematic diagram illustrating the structure of the base station controller as shown in Fig. 3.

### Detailed Description of the Embodiments

To make the objects, technical solutions and advantages of the invention more apparent, the embodiments of the invention will be described hereunder in detail with reference to the accompanying drawings.

The radio network according to the first embodiment of the invention is described below based on the principle of the invention.

The radio network in the embodiment may be a Universal Mobile Telecommunication System (UMTS) network, a Global System for Mobile communication (GSM) network, a General Packet Radio Service (GPRS) network, a Code Division Multiple Access 2000 (CDMA2000) network, a Time Division Synchronous Code Division Multiple Access (TD-SCDMA) network, a Worldwide Interoperability for Microwave Access (WiMAX) network or a Wireless Fidelity (Wi-Fi) network.

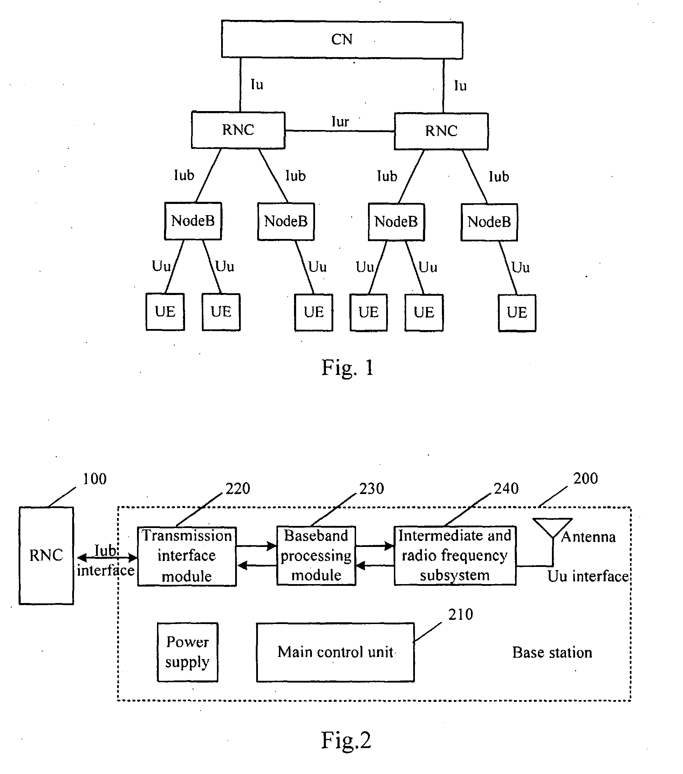

The network structure in the embodiment is described below by taking a UMTS network as an example. As shown in Fig. 1, the UMTS network includes a User Equipment (UE), a Core Network (CN), an RNC and a base station (NodeB).

The UE is adapted to exchange data with network equipments via a Uu interface, so as to provide a subscriber with various service functions in a circuit switched domain and a packet switched domain.

The CN is adapted to process all voice calls and data connections in the UMTA system and implement a routing function as well as an exchange with external networks.

The RNC is mainly adapted to implement functions such as connection setup and disconnection, switching, macro diversity combining, and radio resource management and controlling, etc.

The NodeB includes a radio transceiver and a baseband processing component, and is mainly adapted to process physical layer protocols of the Uu interface. The primary functions of the NodeB include spread spectrum, modulation, channel encoding and de-spread spectrum, demodulation, channel decoding as well as conversion between a baseband signal and a radio frequency signal, etc.

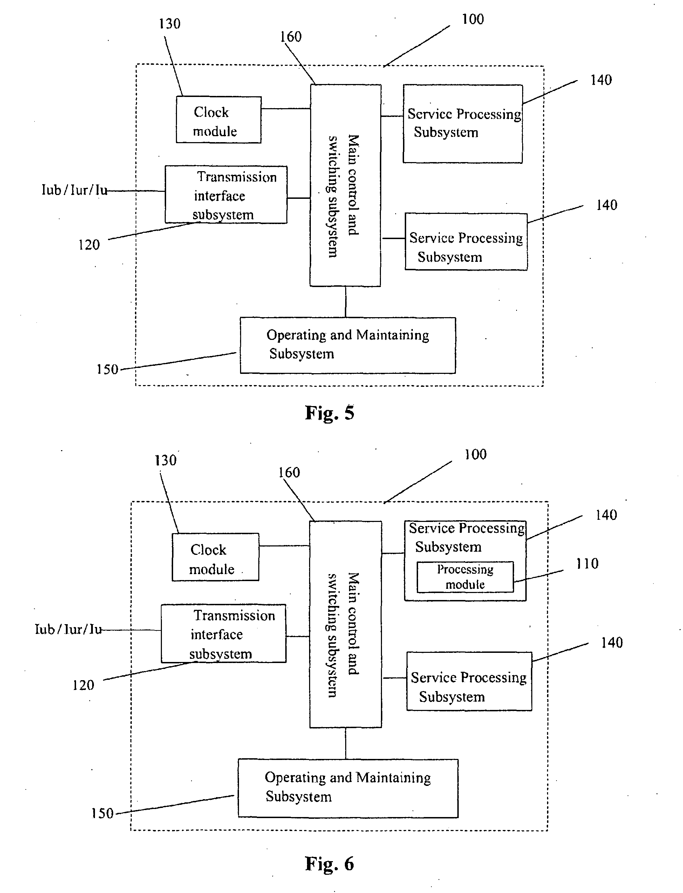

The conventional base station controller 100 mainly includes several components, i.e., a transmission interface subsystem 120, a clock module 130, one or more service processing subsystem 140, a operating and maintaining subsystem 150 and a main control and switching subsystem 160, as shown in Fig. 5.

The conventional base station 200 mainly includes several components, i.e., a main control unit 210, a transmission interface module 220, a baseband processing module 230 and an intermediate and radio frequency subsystem 240, as shown in Fig. 2.

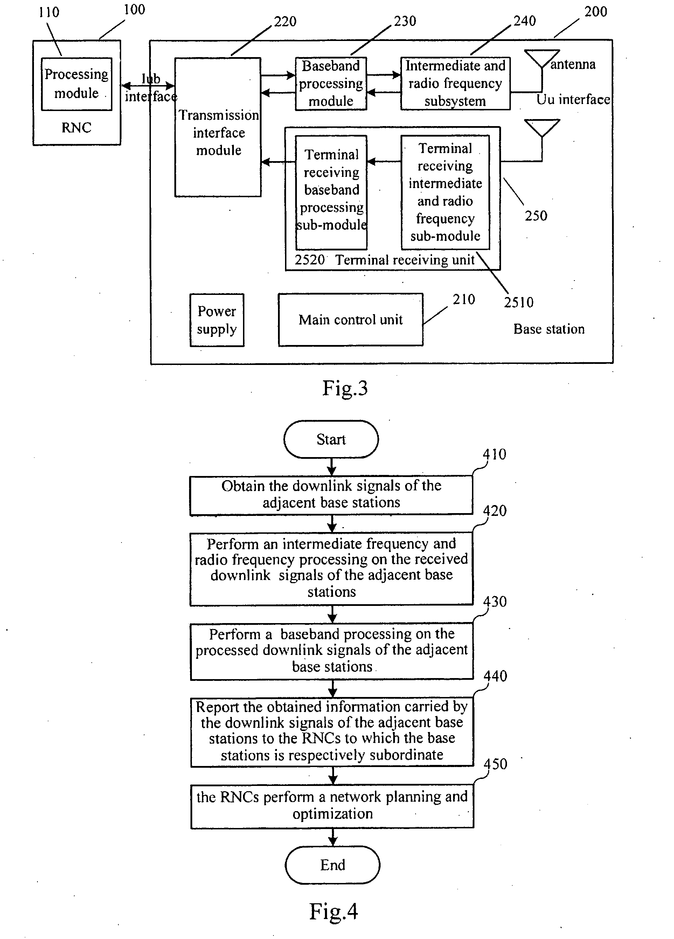

The first embodiment relates to the base station and the RNC in the UMTS network. As illustrated in Fig. 3, in addition to the conventional function modules, the base station further includes a terminal receiving unit 250 for obtaining information carried by downlink signals of this station's adjacent base stations. Here, the terminal receiving unit 250 includes a terminal receiving intermediate and radio frequency sub-module 2510 for performing an intermediate frequency and radio frequency processing on the received downlink signals of the adjacent base stations, and a terminal receiving baseband processing sub-module 2520 for performing a baseband processing on the downlink signals of the adjacent base stations which have been subjected to the intermediate frequency and radio frequency processing. Accordingly, the RNC further includes a processing module 110 for performing a network planning and optimization, as shown in Fig. 6. The processing module 110 is arranged in a service processing subsystem 140. Of course, in variations of the embodiment, the processing module 110 may be arranged in the base station controller 100 as a dependent module, instead of being arranged in the serve processing subsystem 140. Although only one processing module 110 is shown in Fig. 6, there may be multiple processing modules in the base station controller, each of them being arranged in a service processing subsystem.

More particularly, the base station obtains information carried by the downlink signals of the adjacent base stations dynamically via the terminal receiving unit 250, and further performs the intermediate frequency and radio frequency processing on the received downlink signals of the adjacent base stations by using the terminal receiving intermediate and radio frequency sub-module 2510 in the terminal receiving unit 250. Subsequently, the base station performs the baseband processing on the downlink signals of the adjacent base stations, which have been subjected to the intermediate frequency and radio frequency processing, through the terminal receiving baseband processing sub-module 2520, and reports the information carried by the downlink signals of the adjacent base stations, which have been subjected to the baseband processing, in real time to the RNC to which the base station is subordinate via the transmission interface module 220. After receiving from its subordinate base station the information carried by the downlink signals of the adjacent base stations of the subordinate base station, the RNC will perform a corresponding adjustment through the processing module 110 according to the information to optimize the network.

For example, the base station may obtain signal strength information of its adjacent base stations dynamically through the terminal receiving unit 250, performs the intermediate frequency and radio frequency processing on the information through the terminal receiving intermediate and radio frequency sub-module 2510 in the terminal receiving unit 250, and performs the baseband processing on the information, which has been subjected to the intermediate frequency and radio frequency processing, through the terminal receiving baseband processing sub-module 2520 and then reports the signal strength information of the adjacent base stations to the RNC to which the base station is subordinate via the transmission interface module 220. The processing module 110 in the RNC performs a unified adjustment on the base stations' signal strengths according to the information. In this way, a better effect of cell signal coverage and interference controlling may be achieved and the network optimization may be realized. Since each of the base stations obtains information carried by the downlink signals of its adjacent base stations dynamically, and reports the information in real time to the RNC to which the base station is subordinate after processing the information, the radio network optimization may be implemented automatically and in real time by the RNCs inside the radio network according to the reported information.

The radio network according to the first embodiment of the invention is described above, and a method of network planning and optimization in a radio network according to the second embodiment of the invention is described in detail below.

As shown in Fig. 4, the method of network planning and optimization according to the second embodiment of the invention includes the following processes:

In process 410, base stations in the radio network obtain downlink signals of their respective adjacent base stations through a cell searching function and/or a broadcast channel, respectively. For example, the base stations may obtain information of their surrounding cells such as scramble resource information, frequency resource, signal strength and broadcast system message, etc., through the cell searching function and/or the broadcast channel.

In process 420, the base stations perform an intermediate frequency and radio frequency processing on the received downlink signals of their respective adjacent base stations, such as the signals of other cells.

In process 430, the base stations perform a baseband processing on the downlink signals of the adjacent base stations which have been subjected to the intermediate frequency and radio frequency processing.

In process 440, the base stations report information carried by the downlink signals of the adjacent base stations which have been subjected to the baseband processing to the RNCs to which the base stations are subordinate respectively.

In process 450, the RNCs perform a planning and optimization on the current network according to the received information carried by downlink signals of the adjacent base stations. For instance, in a practical network planning, since different scrambles are required to be used by adjacent cells respectively in the case of the same frequency, the RNCs may set for their respective local cell a scramble different from that of the surrounding cells automatically according to the received scramble resource information of the adjacent cells when performing the network planning. For another example, the RNCs may adjust the signal strengths of the base stations according to the received information of the signal strength of the adjacent cells, thus a better effect of cell signal coverage and interference controlling may be achieved and the network optimization may be realized.

The network planning and optimization is implemented by the RNCs according to information carried by the downlink signals of the adjacent base stations reported by the RNCs' respective subordinate base stations. In this way, the effect of automatic network planning and optimization is improved greatly, and thus the speed of network construction is increased and the cost of network construction and maintenance is reduced.

The radio network in the embodiment of the invention may also be a UMTS network, a GSM network, a GPRS network, a CDMA2000 network, a TD-SCDMA network, a WiMAX network or a Wi-Fi network, etc.

Although the present invention has been illustrated and described with reference to some preferred embodiments of the invention, it should be understood by those skilled in the art that various kinds of modification can be done in form and in detail without departing from the scope of the invention as defined in the appended claims.

## Claims

1. A method for network planning and maintenance of a radio communications network, the radio communication network comprising a base station controller (RNC, 100) and a plurality of base stations (Node B, 200) subordinate to the base station controller, the method **characterized by:**
obtaining (410, 420, 430), by subordinate base stations (Node B, 200) in the radio communication network, downlink signals of adjacent base stations being adjacent to the respective subordinate base stations;
reporting (440), by the subordinate base stations (Node B, 200), information carried by the obtained downlink signals (410, 420, 430) of the adjacent base stations to the base station controller (RNC, 100);
receiving (440, 450), in the base station controller (RNC, 100), the information reported from the subordinate base stations (Node B, 200);
performing (450), by the base station controller (RNC, 100), planning and maintenance of the network according to the information received,
wherein the obtaining the downlink signals comprises obtaining the downlink signals of the adjacent base stations (Node B, 200) through a cell searching function and/or a broadcast channel.

2. The method according to claim 1, wherein the information received comprises at least one of: a cell scramble resource, a frequency resource, signal strength and a broadcast system message.

3. The method according to claims 1-2, wherein the obtaining the downlink signals of the adjacent base stations (Node B, 200) comprising:
obtaining, by a terminal receiving unit (250) of the base stations (Node B, 200), the downlink signals of the base stations (Node B, 200) adjacent to the respective subordinate base stations (Node B, 200).

4. The method according to claim 3, wherein the obtaining the downlink signals of the adjacent base stations (Node B, 200) further comprising:
performing, by the terminal receiving unit (250), an intermediate frequency and a radio frequency processing on the obtained downlink signals of the adjacent base stations (Node B, 200); and
performing, by the terminal receiving unit (250), a baseband processing on the downlink signals of the adjacent base stations (Node B, 200).

5. The method according to claims 1-4, wherein the reporting information carried by the obtained downlink signals comprises:
reporting, by a transmission interface module(220) of the base stations (Node B, 200), to the base station controller (RNC, 100).

6. A radio network, adapted for network planning and maintenance, comprising a base station controller (RNC, 100) and a plurality of base stations (Node B, 200) subordinate to the base station controller (RNC, 100), **characterized by**:
each of the subordinate base stations (Node B, 200) comprising a terminal receiving unit (250) for obtaining downlink signals of base stations (Node B, 200) adjacent to the subordinate base station (Node B, 200);
the base station controller (RNC, 100) comprising a processing module (110) for implementing network planning and maintenance according to information received; and
the subordinate base stations (Node B, 200) being arranged for reporting information carried by the downlink signals obtained by the terminal receiving unit (250) in the subordinate base stations (Node B, 200) to the base station controller (RNC, 100); and
the processing module (110) in the base station controller (RNC, 100) being adapted for performing the network planning and maintenance according to the information received,
wherein the terminal receiving unit (250) is adapted for obtaining downlink signals of the adjacent base stations (Node B, 200) through a cell searching function and/or a broadcast channel.

7. The radio network according to claim 6, wherein the terminal receiving unit (250) further comprises:
a terminal receiving intermediate and radio frequency sub-module (2510) for performing an intermediate frequency and a radio frequency processing on the received downlink signals of the adjacent base stations (Node B, 200); and
a terminal receiving baseband processing sub-module (2520) for performing a baseband processing on the downlink signals of the adjacent base stations (Node B, 200) processed by the terminal receiving intermediate and radio frequency sub-module (2510).

8. The radio network according to any one of claims 6 to 7, wherein:
the base stations (Node B, 200) each further comprise a transmission interface module (220) for exchanging information with the base station controller (RNC, 100);
the subordinate base stations (Node B, 200) are arranged for reporting the information carried by the downlink signals of the adjacent base stations (Node B, 200) to the base station controller (RNC, 100), via the base stations' respective transmission interface modules (220).

9. The radio network according to any one of claims 6 to 8, wherein the terminal receiving unit (250) is adapted for obtaining the information carried by downlink signals of the adjacent base stations (Node B, 200) in real time, and reporting the obtained information carried by the downlink signals of the adjacent base stations (Node B, 200) in real time to the base station controller (RNC, 100).

10. The radio network according to claim 9, wherein the radio network is a Universal Mobile Telecommunication System (UMTS) network, a Global System for Mobile communication (GSM) network, a General Packet Radio Service (GPRS) network, a Code Division Multiple Access 2000 (CDMA2000) network, a Time Division Synchronous Code Division Multiple Access (TD-SCDMA) network, a Worldwide Interoperability for Microwave Access (WiMAX) network or a Wireless Fidelity (Wi-Fi) network.

11. A base station (Node B, 200), comprising a main control unit (210), a baseband processing module (230) and an intermediate and radio frequency subsystem(240) **characterized by**:
a terminal receiving unit (250) for obtaining downlink signals of base stations (Node B, 200) adjacent to the base station (Node B, 200),
wherein the terminal receiving unit (250) is adapted for obtaining the downlink signals of the adjacent base stations (Node B, 200) through a cell searching function and/or a broadcast channel.

12. The base station (Node B, 200) according to claim 11, wherein the base station (Node B, 200) is arranged for reporting information carried by the downlink signals obtained by the terminal receiving unit (250) to a base station controller (RNC, 100).

13. The base station (Node B, 200) according to claims 11-12, wherein the terminal receiving unit (250) further comprises:
a terminal receiving intermediate and radio frequency sub-module (2510) for performing an intermediate frequency and a radio frequency processing on the received downlink signals of the adjacent base stations (Node B, 200); and
a terminal receiving baseband processing sub-module (2520) for performing a baseband processing on the downlink signals of the adjacent base stations (Node B, 200).

14. The base station (Node B, 200) according to claims 11-13, further comprising:
a transmission interface module (220) for exchanging information with the base station controller (RNC, 100);
the base station (Node B, 200) being adapted for reporting information carried by the downlink signals of the adjacent base stations (Node B, 200) to the base station controller (RNC, 100) via the transmission interface module.

15. A base station controller (RNC, 100) comprising a processing module (110) for a radio communications network comprising a plurality of base stations (Node B, 200) subordinate to the base station controller (RNC, 100), **characterized by:**
the base station controller (RNC, 100) being arranged (120, 160) for receiving downlink signals of adjacent base stations (Node B, 200) adjacent of respective base stations (Node B, 200) subordinate to the base station controller (RNC, 100);
the processing module (110, 140) being adapted for implementing a network planning and maintenance according to information carried by the received downlink signals;
wherein the downlink signals of the adjacent base stations (Node B, 200) are obtained by the respective base stations (Node B, 200) through a cell searching function and/or a broadcast channel.

16. The base station controller (RNC, 100) according to claim 15, further comprising a transmission interface subsystem (120), a clock module (130), a service processing subsystem (140), an operating and maintaining subsystem (150) and a main control and switching subsystem (160).

17. The base station controller (RNC, 100) according to claim 16, wherein the processing module (110, 140) is arranged in the service processing subsystem (140).

## Patentansprüche

1. Verfahren zur Netzplanung und Netzverwaltung eines Funk-Kommunikationsnetzes, wobei das Funk-Kommunikationsnetz einen Basisstation-Controller (RNC, 100) und eine Mehrzahl von Basisstationen (Knoten B, 200) aufweist, die dem Basisstation-Controller untergeordnet sind,
**gekennzeichnet durch**:
Gewinnen (410, 420, 430), **durch** untergeordnete Basisstationen (Knoten B, 200) in dem Funk-Kommunikationsnetz, von Abwärtsstrecke-Signalen von benachbarten Basisstationen, die benachbart zu den jeweiligen untergeordneten Basisstationen sind;
Melden (440), **durch** die untergeordneten Basisstationen (Knoten B, 200), von Information, die **durch** die gewonnenen Abwärtsstrecke-Signale (410, 420, 430) der benachbarten Basisstationen übertragen wird, an den Basisstation-Controller (RNC, 100);
Empfangen (440, 450), in dem Basisstation-Controller (RNC, 100), der Information, die von den untergeordneten Basisstationen (Knoten B, 200) gemeldet wird;
Durchführen (450), **durch** den Basisstation-Controller (RNC, 100), von Planung und Verwaltung des Netzes gemäß der empfangenen Information,
wobei das Gewinnen der Abwärtsstrecke-Signale ein Gewinnen der Abwärtsstrecke-Signale der benachbarten Basisstationen (Knoten B, 200) **durch** eine Zell-Suchfunktion und/oder einen Rundfunkkanal aufweist.

2. Verfahren gemäß Anspruch 1, wobei die empfangene Information zumindest eine aufweist von:
einer Zell-Verschlüsselungsressource,
einer Frequenzressource,
einer Signalstärke und
einer Rundfunksystem-Nachricht.

3. Verfahren gemäß Ansprüchen 1-2, wobei das Gewinnen der Abwärtsstrecke-Signale der benachbarten Basisstationen (Knoten B, 200) aufweist:
Gewinnen, durch eine Endgerät-Empfangseinheit (250) der Basisstationen (Knoten B, 200), der Abwärtsstrecke-Signale der Basisstationen (Knoten B, 200), die zu den jeweiligen untergeordneten Basisstationen (Knoten B, 200) benachbart sind.

4. Verfahren gemäß Anspruch 3, wobei das Gewinnen der Abwärtsstrecke-Signale der benachbarten Basisstationen (Knoten B, 200) ferner aufweist:
Durchführen, durch die Endgerät-Empfangseinheit (250), einer Zwischenfrequenzverarbeitung und einer Funkfrequenzverarbeitung an den gewonnenen Abwärtsstrecke-Signalen der benachbarten Basisstationen (Knoten B, 200); und
Durchführen, durch die Endgerät-Empfangseinheit (250), einer Basisbandverarbeitung an den Abwärtsstrecke-Signalen der benachbarten Basisstationen (Knoten B, 200).

5. Verfahren gemäß Ansprüchen 1-4, wobei die von den gewonnenen Abwärtsstrecke-Signalen übertragene Meldeinformation aufweist:
Melden, durch ein Übertragungsschnittstelle-Modul (220) der Basisstationen (Knoten B, 200), an den Basisstation-Controller (RNC, 100).

6. Funknetz, das zur Netzplanung und Netzverwaltung eingerichtet ist, welches einen Basisstation-Controller (RNC, 100) und eine Mehrzahl von Basisstationen (Knoten B, 200) aufweist, die dem Basisstation-Controller untergeordnet sind,
**dadurch gekennzeichnet, dass**:
jede der untergeordneten Basisstationen (Knoten B, 200) eine Endgerät-Empfangseinheit (250) zum Gewinnen von Abwärtsstrecke-Signalen von Basisstationen (Knoten B, 200), die benachbart zu der untergeordneten Basisstation (Knoten B, 200) sind, aufweist;
der Basisstation-Controller (RNC, 100) ein Verarbeitungsmodul (110) zum Implementieren von Netzplanung und Netzverwaltung gemäß empfangener Information aufweist; und
die untergeordneten Basisstationen (Knoten B, 200) zum Melden von Information, die von den Abwärtsstrecke-Signalen übertragen wird, welche von der Endgerät-Empfangseinheit (250) in den untergeordneten Basisstationen (Knoten B, 200) gewonnen wird, an den Basisstation-Controller (RNC, 100) eingerichtet sind; und
das Verarbeitungsmodul (110) in dem Basisstation-Controller (RNC, 100) zum Durchführen der Netzplanung und der Netzverwaltung gemäß der empfangenen Information eingerichtet ist,
wobei die Endgerät-Empfangseinheit (250) zum Gewinnen von Abwärtsstrecke-Signalen der benachbarten Basisstationen (Knoten B, 200) durch eine Zell-Suchfunktion und/oder einen Rundfunkkanal eingerichtet ist.

7. Funknetz gemäß Anspruch 6, wobei die Endgerät-Empfangseinheit (250) ferner aufweist:
ein Endgerät-Empfangs-Zwischenfrequenz-und-Funkfrequenz-Untermodul (2510) zum Durchführen einer Zwischenfrequenzverarbeitung und einer Funkfrequenzverarbeitung an den empfangenen Abwärtsstrecke-Signalen der benachbarten Basisstationen (Knoten B, 200); und
ein Endgerät-Empfangs-Basisbandverarbeitung-Untermodul (2520) zum Durchführen einer Basisbandverarbeitung an den Abwärtsstrecke-Signalen der benachbarten Basisstationen (Knoten B, 200), die durch das Endgerät-Empfangs-Zwischenfrequenz-und-Funkfrequenz-Untermodul (2510) verarbeitet wurden.

8. Funknetz gemäß einem der Ansprüche 6 und 7, wobei:
die Basisstationen (Knoten B, 200) jeweils ferner ein Übertragungsschnittstelle-Modul (220) zum Austauschen von Information mit dem Basisstation-Controller (RNC, 100) aufweisen;
die untergeordneten Basisstationen (Knoten B, 200) zum Melden der Information, die durch die Abwärtsstrecke-Signale der benachbarten Basisstationen (Knoten B, 200) übertragen wird, an den Basisstation-Controller (RNC, 100) über die jeweiligen Übertragungsschnittstelle-Module (220) der Basisstationen eingerichtet sind.

9. Funknetz gemäß einem der Ansprüche 6 bis 8, wobei die Endgerät-Empfangseinheit (250) zum Gewinnen der Information, die von den Abwärtsstrecke-Signalen der benachbarten Basisstationen (Knoten B, 200) in Echtzeit übertragen wird, und Melden der gewonnenen Information, die von den Abwärtsstrecke-Signalen der benachbarten Basisstationen (Knoten B, 200) in Echtzeit übertragen wird, an den Basisstation-Controller (RNC, 100) eingerichtet ist.

10. Funknetz gemäß Anspruch 9, wobei das Funknetz ein Universelles-Mobiles-Telekommunikationssystem(UMTS)-Netz, ein Globales-System-für-Mobile-Kommunikation(GSM)-Netz, ein Allgemeiner-Paketfunkdienst (GPRS)-Netz, ein Code-Vielfachzugriff-2000(CDMA2000)-Netz, ein Zeitmultiplex-Synchroncode-Vielfachzugriff(TD-SCDMA)-Netz, ein Weltweite-Interoperabilität-für-Mikrowellenzugriff(WiMAX)-Netz oder ein Drahtlose-Wiedergabetreue(Wi-Fi)-Netz ist.

11. Basisstation (Knoten B, 200), welche eine Haupt-Steuereinheit (210), ein Basisband-Verarbeitungsmodul (230) und ein Zwischenfrequenz- und Funkfrequenz-Untersystem (240) aufweist,
**gekennzeichnet durch**
eine Endgerät-Empfangseinheit (250) zum Gewinnen von Abwärtsstrecke-Signalen von Basisstationen (Knoten B, 200), die benachbart zu der Basisstation (Knoten B, 200) sind,
wobei die Endgerät-Empfangseinheit (250) zum Gewinnen der Abwärtsstrecke-Signale der benachbarten Basisstationen (Knoten B, 200) **durch** eine Zell-Suchfunktion und/oder einen Rundfunkkanal eingerichtet ist.

12. Basisstation (Knoten B, 200) gemäß Anspruch 11,
wobei die Basisstation (Knoten B, 200) zum Melden von Information, die durch Abwärtsstrecke-Signale übertragen wird, welche durch die Endgerät-Empfangseinheit (250) gewonnen wurde, an einen Basisstation-Controller (RNC, 100) eingerichtet ist.

13. Basisstation (Knoten B, 200) gemäß Ansprüchen 11-12,
wobei die Endgerät-Empfangseinheit ferner aufweist:
ein Endgerät-Empfangs-Zwischenfrequenz-und-Funkfrequenz-Untermodul (2510) zum Durchführen einer Zwischenfrequenzverarbeitung und einer Funkfrequenzverarbeitung an den empfangenen Abwärtsstrecke-Signalen der benachbarten Basisstationen (Knoten B, 200); und
ein Endgerät-Empfangs-Basisband-Verarbeitung-Untermodul (2520) zum Durchführen einer Basisband-Verarbeitung an den Abwärtsstrecke-Signalen der benachbarten Basisstationen (Knoten B, 200).

14. Basisstation (Knoten B, 200) gemäß Ansprüchen 11-13, welche ferner aufweist:
ein Übertragungsschnittstelle-Modul (220) zum Austauschen von Information mit dem Basisstation-Controller (RNC, 100);
wobei die Basisstation (Knoten B, 200) zum Melden von Information, die durch die Abwärtsstrecke-Signale der benachbarten Basisstationen (Knoten B, 200) übertragen wird, an den Basisstation-Controller (RNC, 100) über das Übertragungsschnittstelle-Modul eingerichtet ist.

15. Basisstation-Controller (RNC, 100) mit einem Verarbeitungsmodul (110) für ein Funk-Kommunikationsnetz, das eine Mehrzahl von Basisstationen (Knoten B, 200) aufweist, welche dem Basisstation-Controller (RNC, 100) untergeordnet sind,
**dadurch gekennzeichnet, dass**:
der Basisstation-Controller (RNC, 100) eingerichtet ist (120, 160) zum Empfang von Abwärtsstrecke-Signalen benachbarter Basisstationen (Knoten B, 200), die benachbart zu jeweiligen Basisstationen (Knoten B, 200) sind, welche dem Basisstation-Controller (RNC, 100) untergeordnet sind;
das Verarbeitungsmodul (110, 140) eingerichtet ist zum Implementieren einer Netzplanung und einer Netzverwaltung gemäß Information, die durch die empfangenen Abwärtsstrecke-Signale übertragen wird,
wobei die Abwärtsstrecke-Signale der benachbarten Basisstationen (Knoten B, 200) durch die jeweiligen Basisstationen (Knoten B, 200) durch eine Zell-Suchfunktion und/oder einen Rundfunkkanal gewonnen werden.

16. Basisstation-Controller (RNC, 100) gemäß Anspruch 15, der ferner ein Übertragungsschnittstelle-Untersystem (120), ein Taktmodul (130), ein Dienstverarbeitungs-Untersystem (140), ein Betriebs- und Verwaltungs-Untersystem 150 und ein Haupt-Steuer-und-Umschalt-Untersystem (160) aufweist.

17. Basisstation-Controller (RNC, 100) gemäß Anspruch 16, wobei das Verarbeitungsmodul (110, 140) in dem Dienstverarbeitungs-Untersystem (140) eingerichtet ist.

## Revendications

1. Procédé de planification réseau de réseau et de maintenance d'un réseau de communication radio, le réseau de communication radio comportant un contrôleur de station de base (RNC, 100) et une pluralité de stations de base (noeud B, 200) subordonnées au contrôleur de station de base, le procédé étant **caractérisé en ce qu'**il comporte les étapes ci-après consistant à :
➢ obtenir (410, 420, 430), par le biais de stations de base subordonnées (noeud B, 200) dans le réseau de communication radio, des signaux en liaison descendante de stations de base adjacentes lesquelles sont adjacentes aux stations de base subordonnées respectives ;
➢ signaler (440), par le biais des stations de base subordonnées (noeud B, 200), l'information transportée par les signaux en liaison descendante obtenus (410, 420, 430) des stations de base adjacentes, au contrôleur de station de base (RNC,100) ;
➢ recevoir (440, 450), dans le contrôleur de station de base (RNC, 100), l'information signalée par le biais des stations de base subordonnées (noeud B, 200) ;
➢ mettre en oeuvre (450), par l'intermédiaire du contrôleur de station de base (RNC, 100), une planification et une maintenance du réseau selon l'information reçue,
dans lequel, l'obtention des signaux en liaison descendante comporte l'étape consistant à obtenir les signaux en liaison descendante des stations de base adjacentes (noeud B, 200) par le biais d'une fonction de recherche de cellule et/ou d'un canal de diffusion.

2. Procédé selon la revendication 1, dans lequel l'information reçue comporte au moins l'un des éléments suivants une ressource de brouillage de cellule, une ressource de fréquence, une puissance de signal et un message de système de diffusion générale.

3. Procédé selon l'une quelconque des revendications 1 à 2, dans lequel l'obtention des signaux en liaison descendante des stations de base adjacentes (noeud B, 200) comporte l'étape ci-dessous consistant à obtenir, par le biais d'une unité de terminal récepteur (250) des stations de base (noeud B, 200), les signaux en liaison descendante des stations de base (noeud B, 200) adjacentes aux stations de base subordonnées respectives (noeud B, 200).

4. Procédé selon la revendication 3, dans lequel l'obtention des signaux en liaison descendante des stations de base adjacentes (noeud B, 200) comporte en outre les étapes ci-dessous consistant à :
➢ mettre en oeuvre, par le biais de l'unité de terminal récepteur (250), un traitement de fréquence radio et de fréquence intermédiaire sur les signaux en liaison descendante obtenus des stations de base adjacentes (noeud B, 200), et
➢ mettre en oeuvre, par le biais de l'unité de terminal récepteur (250), un traitement de bande de base sur les signaux en liaison descendante des stations de base adjacentes (noeud B, 200).

5. Procédé selon l'une quelconque des revendications 1 à 4, dans lequel la signalisation de l'information transportée par les signaux en liaison descendante obtenus comprend l'étape ci-dessous consistant à signaler l'information, par le biais d'un module d'interface de transmission (220) des stations de base (noeud B, 200), au contrôleur de station de base (RNC, 100).

6. Réseau radio, apte à la maintenance et à la planification de réseau, comportant un contrôleur de station de base (RNC, 100) et une pluralité de stations de base (noeud B, 200) subordonnées au contrôleur de station de base (RNC, 100), **caractérisé en ce que** :
➢ chacune des stations de base subordonnées (noeud B, 200) comporte une unité de terminal récepteur (250) permettant d'obtenir des signaux en liaison descendante de stations de base (noeud B, 200) adjacentes à la station de base subordonnée (noeud B, 200) ;
➢ le contrôleur de station de base (RNC, 100) comporte un module de traitement (110) pour mettre en oeuvre la maintenance et la planification de réseau selon l'information reçue ; et
➢ les stations de base subordonnées (noeud B, 200) étant agencées pour signaler l'information transportée par les signaux en liaison descendante obtenus par l'unité de terminal récepteur (250), dans les stations de base subordonnées (noeud B, 200), au contrôleur de station de base (RNC, 100), et
➢ le module de traitement (110) dans le contrôleur de station de base (RNC, 100) étant apte à mettre en oeuvre la maintenance et la planification de réseau selon l'information reçue,
dans lequel l'unité de terminal récepteur (250) est apte à obtenir des signaux en liaison descendante des stations de base adjacentes (noeud B, 200) par le biais d'une fonction de recherche de cellule et/ou d'un canal de diffusion.

7. Réseau radio selon la revendication 6, dans lequel l'unité de terminal récepteur (250) comporte en outre:
➢ un sous-module de fréquence radio et de fréquence intermédiaire de terminal récepteur (2510) pour mettre en oeuvre un traitement de fréquence radio et de fréquence intermédiaire sur les signaux en liaison descendante reçus des stations de base adjacentes (noeud B, 200) ; et
➢ un sous-module de traitement de bande de base de terminal récepteur (2520) pour mettre en oeuvre un traitement de bande de base sur les signaux en liaison descendante des stations de base adjacentes (noeud B, 200) traités par le sous-module de fréquence radio et de fréquence intermédiaire de terminal récepteur (2510).

8. Réseau radio selon l'une quelconque des revendications 6 à 7, dans lequel :
➢ les stations de base (noeud B, 200) comportent en outre chacune un module d'interface de transmission (220) pour échanger des informations avec le contrôleur de station de base (RNC, 100) ;
➢ les stations de base subordonnées (noeud B, 200) sont agencées pour signaler l'information transportée par les signaux en liaison descendante des stations de base adjacentes (noeud B, 200) au contrôleur de station de base (RNC, 100), par l'intermédiaire des modules d'interface de transmission respectifs (220) des stations de base.

9. Réseau radio selon l'une quelconque des revendications 6 à 8, dans lequel l'unité de terminal récepteur (250) est apte à obtenir l'information transportée par les signaux en liaison descendante des stations de base adjacentes (noeud B, 200) en temps réel, et à signaler l'information obtenue transportée par les signaux en liaison descendante des stations de base adjacentes (noeud B, 200) en temps réel au contrôleur de station de base (RNC, 100).

10. Réseau radio selon la revendication 9, dans lequel le réseau radio est un réseau de système universel de télécommunication avec les mobiles (UMTS), un réseau de système mondial de communication avec les mobiles (GSM), un réseau de service général de radiocommunication par paquets (GPRS), un réseau d'accès multiple par répartition en code de l'an 2000 (CDMA2000), un réseau d'accès multiple par répartition en code synchrone et répartition dans le temps (TD-SCDMA), un réseau de technologie d'accès WiMAX (WiMAX) ou un réseau de technologie Wi-Fi (Wi-Fi).

11. Station de base (noeud B, 200) comportant une unité de commande principale (210), un module traitement de bande de base (230) et un sous-système de fréquence intermédiaire et de fréquence radio (240) **caractérisé par** :
une unité de terminal récepteur (250) pour obtenir des signaux en liaison descendante de stations de base (noeud B, 200) adjacentes à la station de base (noeud B, 200),
dans laquelle, l'unité de terminal récepteur (250) est apte à obtenir les signaux en liaison descendante des stations de base adjacentes (noeud B, 200) par le biais d'une fonction de recherche de cellule et/ou d'un canal de diffusion.

12. Station de base (noeud B, 200) selon la revendication 11, dans laquelle la station de base (noeud B, 200) est agencée pour signaler l'information transportée par les signaux en liaison descendante obtenus par l'unité de terminal récepteur (250) à un contrôleur de station de base (RNC, 100).

13. Station de base (noeud B, 200) selon les revendications 11 à 12, dans laquelle l'unité de terminal récepteur (250) comprend en outre :
➢ un sous-module de fréquence radio et de fréquence intermédiaire de terminal récepteur (2510) pour mettre en oeuvre un traitement de fréquence radio et de fréquence intermédiaire sur les signaux en liaison descendante reçus des stations de base adjacentes (noeud B, 200) ; et
➢ un sous-module de traitement de bande de base de terminal récepteur (2520) pour mettre en oeuvre un traitement de bande de base sur les signaux en liaison descendante des stations de base adjacentes (noeud B, 200).

14. Station de base (noeud B, 200) selon les revendications 11 à 13, comportant en outre :
➢ un module d'interface de transmission (220) pour échanger des informations avec le contrôleur de station de base (RNC, 100) ;
➢ la station de base (noeud B, 200) étant apte à signaler l'information transportée par les signaux en liaison descendante des stations de base adjacentes (noeud B, 200) au contrôleur de station de base (RNC, 100) par l'intermédiaire du module d'interface de transmission.

15. Contrôleur de station de base (RNC, 100) comportant un module de traitement (110) pour un réseau de communication radio comportant une pluralité de stations de base (noeud B, 200) subordonnées au contrôleur de station de base (RNC, 100), **caractérisé en ce que** :
➢ le contrôleur de station de base (RNC, 100) est agencé (120, 160) pour recevoir des signaux en liaison descendante de stations de base adjacentes (noeud B, 200), qui sont adjacentes à des stations de base respectives (noeud B, 200) subordonnées au contrôleur de station de base (RNC, 100) ;
➢ le module de traitement (110, 140) est apte à mettre en oeuvre une maintenance et une planification de réseau selon l'information transportée par les signaux en liaison descendante ;
dans lequel les signaux en liaison descendante des stations de base adjacentes (noeud B, 200) sont obtenus par les stations de base respectives (noeud B, 200) par le biais d'une fonction de recherche de cellule et/ou d'un canal de diffusion.

16. Contrôleur de station de base (RNC, 100) selon la revendication 15, comportant en outre un sous-système d'interface de transmission (120), un module d'horloge (130), un sous-système de traitement de service (140), un sous-système d'exploitation et de maintenance (150) et un sous-système principal de commutation et de commande (160).

17. Contrôleur de station de base (RNC, 100) selon la revendication 16, dans lequel le module de traitement (110, 140) est agencé dans le sous-système de traitement de service (140).
